# EUROPÄISCHE PATENTANMELDUNG

(11) **EP 1 821 266 A1**
(43) Veröffentlichungstag der Anmeldung: **22.08.2007**
(21) Anmeldenummer: 07001176.2
(22) Anmeldetag: 19.01.2007
(51) Int. Cl.: G07F 7/00, B62H 5/00, G07B 15/02

(54) **Verfahren und Vorrichtung zum gesicherten Abstellen eines Nutzobjektes**

(30) Priorität: 17.02.2006 DE 102006007872
(71) Anmelder: DB Rent GmbH, 60327 Frankfurt/Main (DE)
(72) Erfinder: Reth, Philipp, 10405 Berlin (DE); Köhler, Henning, 80634 München (DE)
(74) Vertreter: Zinken-Sommer, Rainer

(57) **Zusammenfassung**

Die Erfindung betrifft ein Verfahren sowie eine Vorrichtung zum gesicherten Abstellen eines Nutzobjektes in einem automatisierten Vermietsystem, welches mit einem Ende untrennbar mit einer ortsfesten Abstellstation verbunden ist und an seinem freien Ende einen Absperrbolzen trägt, sowie mindestens einer mit dem Nutzobjekt unlösbar verbundenen Verriegelungseinrichtung zum Verriegeln des in die Verriegelungseinrichtung einführbaren Absperrbolzens.

Hierzu ist ein Verfahren vorgesehen, bei dem von dem dem Absperrbolzen zugeordneten Signalübertragungsmittel nach erfolgtem Verriegeln des Absperrbolzens in der Verriegelungseinrichtung ein die Abstellstation identifizierendes Signal an das Signalübertragungsmittel der Verriegelungseinrichtung übertragen wird.

Ein vorrichtungsorientierter Lösungsansatz sieht vor, dass der mindestens eine mit der Abstellstation verbundene Absperrbolzen Mittel zum wechselseitigen Übertragen elektrischer und / oder elektromagnetischer Signale zwischen Absperrbolzen und Verriegelungseinrichtung aufweist, wobei das dem Absperrbolzen zugeordnete Signalübertragungsmittel ein die Abstellstation identifizierendes Signal an das Signalübertragungsmittel der Verriegelungseinrichtung überträgt.

## Beschreibung

Die Erfindung betrifft ein Verfahren sowie eine Vorrichtung zum gesicherten Abstellen eines Nutzobjektes in einem automatisierten Vermietsystem mit mindestens einem Absperrseil, welches mit einem Ende untrennbar mit einer ortsfesten Abstellstation verbunden ist und an seinem freien Ende einen Absperrbolzen trägt, sowie mindestens einer mit dem Nutzobjekt unlösbar verbundenen Verriegelungseinrichtung zum Verriegeln des in die Verriegelungseinrichtung einführbaren Absperrbolzens, wobei sowohl der Absperrbolzen als auch die Verriegelungseinrichtung jeweils über Mittel zum wechselseitigen Übertragen elektrischer und / oder elektromagnetischer Signale zwischen Absperrbolzen und Verriegelungseinrichtung verfügen.

Der wirtschaftliche Erfolg beim kommerziellen Einsatz von Systemen zur Vermietung von Nutzobjekten steht und fällt mit der zuverlässigen und möglichst lückenlosen Rückgabe der entliehenen Nutzobjekte beim Vermieter. Insbesondere bei Vermietvorgängen, die seitens des Mieters einen eher geringen Vorausplanungshorizont aufweisen, muss ein solches Vermietsystem zudem leicht zugänglich sein und möglichst geringe Systemkosten aufweisen. Die systemimmanenten Kosten müssen bei Vermietungsgeschäften, die ein eher spontanes und kurzfristiges Kundenbedürfnis befriedigen sollen, sehr niedrig sein. Die Entleih- und Rückgabeprozeduren müssen deswegen weitestgehend automatisiert ohne Mitwirkung von Servicepersonalen ablaufen.
Aus der DE 195 28 203 A1 ist ein Verfahren zur kontrollierten zeitlich begrenzten Nutzung von Mietobjekten bekannt, welches eine Sperrvorrichtung benutzt, die nach Eingabe eines Ende-Codes (durch den Mieter im Zuge der Rückgabe des gemieteten Nutzobjektes) einen Quittungscode (als Bestätigung des Mietendes) ausgibt und den Öffnungscode (dieser ist durch den in zeitlicher Reihung nächstfolgenden Mieter zum Öffnen der Sperrvorrichtung einzugeben) in bestimmter Weise verändert. Dies hat den Vorteil, dass der Mieter das Ende des Benutzungsvorganges selbst vorgeben und jederzeit herbeiführen kann. Zudem wird mit der systemgesteuerten Ausgabe des Quittungscodes ein eindeutiger und automatisiert verarbeitbarer Nachweis über das Ende des Benutzungsvorganges erbracht. Dies sind wichtige Voraussetzungen für automatisierte Verleihsysteme.
Aus DE 200 07 049 U1 ist zudem ein Fahrradschloss bekannt, welches in Kombination mit dem aus der DE 195 28 203 A1 bekannten Verfahren für die Realisierung eines Systems zum Verleih von Fahrrädern geeignet ist. Dieses Fahrradschloss weist zum einen ein Absperrseil auf, welches mit einem ersten Ende unlösbar mit dem Fahrrad verbunden ist und an seinem zweiten Ende einen Absperrbolzen aufweist. Zum anderen verfügt dieses Fahrradschloss über eine Verriegelungseinrichtung zum Verriegeln des Absperrbolzens, wobei der durch die Verriegelungseinrichtung verriegelte Absperrbolzen die Benutzung des Fahrrades sperrt, z.B. durch einen sperrenden Eingriff in die Speichen eines Rades. Sowohl die Verriegelungseinrichtung als auch der Absperrbolzen weisen jeweils eine elektrisch ansteuerbare Spule auf, wobei beide Spulen im verriegelten Zustand des Absperrbolzens so nah beieinander angeordnet sind, dass ein vom Absperrbolzen ausgestrahltes Signal von der Verriegelungseinrichtung empfangen werden kann.

Basierend auf diesen beiden technischen Lehren wurde in deutschen Großstädten unter dem Markenzeichen "Call a Bike" ein Fahrrad-Vermietsystem etabliert, dessen Fahrräder mit einem nach DE 200 07 049 U1 ausgeführten Schloss ausgerüstet und verriegelbar sind. Der Nutzer eines solchen Miet-Fahrrades führt nach Beenden der Fahrt das Absperrseil bzw. den daran befestigten Absperrbolzen des dem Fahrrad zugehörigen Schlosses durch die Speichen des Fahrrades hindurch und führt diesen in die Verriegelungseinrichtung desselben Schlosses ein. Durch manuelles Betätigen eines am Fahrradschloss vorgesehenen Mikroschalters aktiviert der Nutzer sowohl die sendende Spule des Absperrbolzens als auch die empfangende Spule der Verriegelungseinrichtung (= Aufnahme des Absperrbolzens). Der Absperrbolzen sendet nun eine das Fahrrad eindeutig kennzeichnende Identifikationsnummer an die Verriegelungseinrichtung. Eine interne Logikschaltung prüft sodann, ob das Fahrrad tatsächlich mit seinem eigenen Schloss abgesperrt wurde - und damit der Nutzung durch den Kunden entzogen ist - oder ob in die Verriegelungseinrichtung lediglich eine Attrappe eingeführt wurde, mit der eine Außerbetriebsetzung des Fahrrades zu betrügerischen Zwecken lediglich vorgetäuscht werden soll. Da die Miet-Fahrräder somit an beliebigen Orten abgestellt werden können, ist jedoch ein zusätzliches technisches System zur Ortung freier Miet-Fahrräder und deren Zuweisung an nutzungswillige Kunden erforderlich. Hieraus ergibt sich eine gewisse psychologische Hemmschwelle in der Nutzung des Vermietsystems, da sich ein nutzungswilliger Kunde zunächst einmal durch Interaktion mit diesem technischen System einen Überblick über den nächstliegenden Standort eines frei verfügbaren Fahrrades verschaffen muss, sofern er nicht zufällig auf ein abgestelltes und freies Fahrrad trifft. Sofern das Vermietsystem aus Kostengründen auf ein technisches System zur Ortung freier Miet-Fahrräder verzichtet, ist es zusätzlich auch auf das korrekte Mitwirken der Nutzer angewiesen. Jeder Nutzer muss dann bei Rückgabe des Mietobjektes eine korrekte Meldung über den Standort des zurückgegebenen Mietobjektes an die Verwaltung des Mietsystems abgeben. Es liegt auf der Hand, dass hieraus eine gewisse Fehleranfälligkeit und Aufwand zum Auffinden von mit falschen Ortsangaben zurückgegebenen Rädern resultieren.

Der Erfindung liegt die Aufgabe zugrunde, ein Verfahren sowie eine Vorrichtung zum gesicherten Abstellen eines Nutzobjektes in einem automatisierten Vermietsystem bereitzustellen, welches gegenüber dem bekannten Stand der Technik niedrigere Betriebskosten sowie eine einfachere Zugänglichkeit für nutzungswillige Kunden aufweist. Insbesondere soll die Missbrauchs-Anfälligkeit bei der Rückgabe entliehener Nutzobjekte gesenkt werden.

Diese Aufgabe wird verfahrensorientiert in Verbindung mit dem Oberbegriff des Patentanspruches 1 erfindungsgemäß dadurch gelöst, dass von dem dem Absperrbolzen zugeordneten Signalübertragungsmittel nach erfolgtem Verriegeln des Absperrbolzens in der Verriegelungseinrichtung ein die Abstellstation identifizierendes Signal an das Signalübertragungsmittel der Verriegelungseinrichtung übertragen wird. Auf diese Weise ist es möglich, dass das Nutzobjekt nicht nur mit seinem eigenen Absperrbolzen verriegelt wird (z.B. beim vorübergehenden Abstellen), sondern auch an einer ortsfesten Abstellstation hinterstellt und aus der Miet-Bindung herausgelöst werden kann. Die erfinderische Idee besteht darin, dass das Nutzobjekt auf äußerst vorteilhafte Weise eine Information über die Identität der ortsfesten Station erhält. Auf diese Weise kann erreicht werden, dass das Nutzobjekt nur an vordefinierbaren ortsfesten Stationen wieder zurückgegeben werden kann. Gleichzeitig ist die Information über die Ortskoordinate des zurückgegebenen Nutzobjektes ohne Mitwirkung des Nutzers und ohne zeitlichen Verzug im Vermietsystem verfügbar. Im Vermietsystem kann ein durchgängiger Automatisierungsgrad erreicht werden, da die bisher notwendige manuelle Umsetzung der Ortsmeldungen von zurückgebenden Kunden (z.B. "Fahrrad ist an der Straßenecke Schlossallee / Burgenstraße abgestellt") in ein für ein automatisiertes System zur Verwaltung der Miet- bzw. Nutzobjekte verarbeitbares Format (z.B. Geokoordinaten) entfällt.

In Ergänzung hierzu sieht das erfinderische Konzept vor, dass das die Abstellstation identifizierende Signal vom Signalübertragungsmittel der Verriegelungseinrichtung an eine dem Nutzobjekt zugehörige elektronische Steuereinheit übermittelt und dort als Voraussetzung für die Erstellung eines Quittungscodes zum Nachweis der Beendigung der Benutzung des von der Verriegelungseinrichtung kontrollierten Nutzobjektes verarbeitet wird.

Gemäß einer sinnvollen Ausgestaltung wird das die Abstellstation identifizierende Signal in einen Quittungscode zum Nachweis der Beendigung der Benutzung des von der Verriegelungseinrichtung kontrollierten Nutzobjektes chiffriert. Auf diese Weise ist es besonders günstig realisierbar, dass der als Rückmeldeinformation verwendete Quittungscode nur aus numerischen Zeichen (Ziffern) aufgebaut ist und damit in besonders leicht automatisierbarer Weise über das Handy des Benutzers (d.h. des Mieters) übertragen werden kann.

Eine besonders sinnvolle Weiterentwicklung der Erfindung ist darin zu sehen, dass nach Übertragung des die Abstellstation identifizierenden Signals an das Nutzobjekt eine Zufallszahl vom Signalübertragungsmittel der Verriegelungseinrichtung erzeugt, an die Abstellstation übertragen und dort zu einem Authentifizierungs-Code weiterverarbeitet wird, der vom Signalübertragungsmittel der Abstellstation wieder an die Verriegelungseinrichtung zurück übertragen wird.
Dies ist insbesondere dann sinnvoll, wenn in der dem Nutzobjekt zugehörigen Steuereinheit nur bei Vorliegen eines als gültig erkannten Authentifizierungs-Codes ein Quittungscode zum Nachweis der Beendigung der Benutzung des von der Verriegelungseinrichtung kontrollierten Nutzobjektes erstellt wird.
Auf diese Weise kann die dem zurückzugebenden Nutzobjekt zugeordnete elektronische Steuereinheit die Identität der Abstellstation verifizieren und insbesondere Betrugsversuche mit manipulierten Sendespulen aufdecken. Das einfache Abhören und Nachbauen durch unauthorisierte Dritte wird damit zumindest erheblich erschwert. Bei derartigen Manipulationen könnte versucht werden, das zurückzugebende Nutzobjekt durch Verschließen mittels einer Attrappe, welche eine vom Vermietsystem zugelassene Identität (beispielsweise einer Abstellstation) ausstrahlt, aus dem aktuellen Vermietungs-Zustand herauszulösen und das Nutzobjekt somit dem Zugriffsbereich des Vermietsystems zu entziehen.

Die Aufgabe wird auch durch eine Vorrichtung gelöst, welche in Verbindung mit dem Oberbegriff des Patentanspruches 6 erfindungsgemäß dadurch gekennzeichnet ist, dass der mindestens eine mit der Abstellstation verbundene Absperrbolzen Mittel zum wechselseitigen Übertragen elektrischer und / oder elektromagnetischer Signale zwischen Absperrbolzen und Verriegelungseinrichtung aufweist, wobei das dem Absperrbolzen zugeordnete Signalübertragungsmittel ein die Abstellstation identifizierendes Signal an das Signalübertragungsmittel der Verriegelungseinrichtung überträgt.

Es hat sich als zweckmäßig erwiesen, wenn die Mittel zum wechselseitigen Übertragen elektrischer und / oder elektromagnetischer Signale zwischen Absperrbolzen und Verriegelungseinrichtung als Induktionsspulen ausgeführt sind, die sowohl im Absperrbolzen als auch in der Verriegelungseinrichtung derart angeordnet sind, dass im Zustand eines in der Verriegelungseinrichtung verriegelten Absperrbolzens ein auf Induktion basierender Signalaustausch möglich ist. Die induktive Signalübertragung bietet sich für Anwendungen unter ungünstigen Umweltbedingungen an, da sie kontaktlos und ohne notwendige "Sicht"-Verbindung abläuft sowie vandalismusresistent und unempfindlich gegenüber Witterungseinflüssen ist.

Es ist ferner vorgesehen, dass die Signalübertragungsmittel mehrerer Absperrbolzen in Parallelschaltung an ein Sender- / Verstärker-Bauelement zur Ausstrahlung des die Abstellstation identifizierenden Signals angeschlossen sind. Die in einer Abstellstation benötigten elektronischen Bauteile lassen sich auf diese Weise wirkungsvoll auf ein Minimum reduzieren.

Der Erfindungsgedanke wird in nachfolgenden Figuren am Beispiel eines Fahrrad-Vermietsystems visualisiert. Es zeigen:

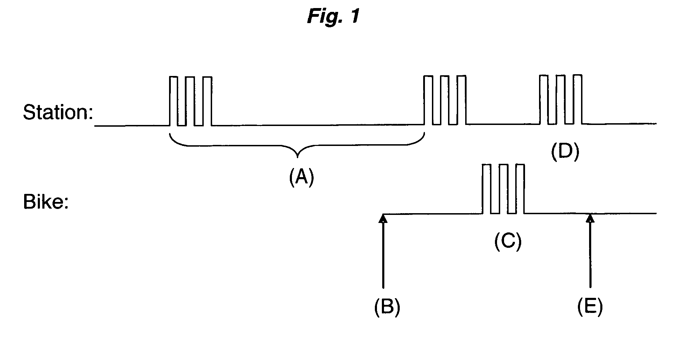

- **Figur 1**: Schematische Darstellung des Signalaustausches zwischen Abstellstation und Miet-Fahrrad
- **Figur 2**: Blockschaltbild einer Abstellstation

Bei dem aus dem Stand der Technik bekannten Fahrrad-Vermietsystem "Call a Bike" führt der Kunde nach dem Beenden der Fahrt den mit dem Miet-Fahrrad untrennbar verbundenen Absperrbolzen durch die Speichen des Fahrrades hindurch und drückt an einer ebenfalls mit dem Miet-Fahrrad verbundenen elektronischen Steuereinheit einen Taster ("Sperrknopf"). Diese Taster-Betätigung aktiviert das Aussenden einer eindeutig diesem Rad zugeordneten Identitäts-Kennung über die im Absperrbolzen des Rades eingelagerte Sende-Spule. Gleichzeitig wird durch diese Taster-Betätigung die in der Verriegelungsvorrichtung des Rades eingelagerte Empfangs-Spule aktiviert. Wenn der Nutzer das gemietete Fahrrad nicht nur vorübergehend versperren will (z.B. temporäres Abstellen des Fahrrades, um in einem Geschäft Einkäufe zu tätigen), sondern das Mietverhältnis beenden und das Miet-Fahrrad für die weitere Nutzung durch andere Kunden freigeben möchte, dann muss die von der Empfangs-Spule empfangene Identitäts-Kennung mit der Identität des Fahrrades übereinstimmen. Andernfalls wird das Miet-Fahrrad als nicht ordnungsgemäß an das Vermietsystem zurückgegeben bewertet, die Steuereinheit des Fahrrades registriert keine Beendigung des Mietvorganges und der Nutzer erhält seitens der Steuereinheit des Fahrrades keine Rückgabe-Quittung ausgestellt.
Unter Anwendung des erfindungsgemäßen Verfahrens versperrt der Kunde das gemietete Fahrrad mit einem an einer ortsfesten Abstellstation angebrachten Absperrseil, welches an seinem freien Ende über einen Absperrbolzen verfügt, der eine eingelagerte Sende-Spule zur Aussendung einer eindeutig dieser Absperrstation zugeordneten Identitäts-Kennung aufweist. Nach dem Beenden der Fahrt fährt der Kunde zu einer erfindungsgemäß ausgeführten Abstellstation, fügt den dort an jedem Abstellplatz vorhandenen Absperrbolzen durch die Speichen des Mietfahrrades hindurch und in die dem Fahrrad zugeordnete Verriegelungseinrichtung ein. Durch Betätigen des Sperrknopfes an der mit dem Miet-Fahrrad verbundenen elektronischen Steuereinheit wird die in der Verriegelungsvorrichtung des Rades eingelagerte Empfangs-Spule aktiviert und kann die von der Sende-Spule ausgesendete Identitäts-Kennung der Abstellstation empfangen. Erkennt die elektronische Steuereinheit eine gültige Identitäts-Kennung, so registriert sie ein Nutzungsende des Miet-Fahrrades und gibt einen Quittungscode hierüber an den Nutzer aus. Natürlich ist auch unter Anwendung des erfindungsgemäßen Verfahrens weiterhin das temporäre Verschließen des Miet-Fahrrades möglich, da nach manueller Betätigung des Sperrknopfes durch den Nutzer auch die Sende-Spule des mit dem Fahrrad untrennbar verbundenen Absperrseils die Identitäts-Kennung des Fahrrades ausstrahlt. Falls die elektronische Steuereinheit des Miet-Fahrrades die eigene ldentitäts-Nummer registriert, dann wurde das Fahrrad mit seinem eigenen Absperrseil verschlossen. Die Steuereinheit des Miet-Fahrrades beendet deshalb das Miet-Verhältnis nicht und wartet in einem "Sleep"- bzw. "Standby"-Modus auf die erneute Entsperrung und Nutzung des bisherigen Nutzers.
Damit das Ausstrahlen der Identitäts-Kennung der Abstellstation nicht mit dem Empfangs-Modus des Miet-Fahrrades synchronisiert werden muss und zur Erhöhung der Sicherheit gegenüber missbräuchlicher Benutzung des Mietsystems ist eine Authentifizierung der Abstellstation gegenüber der elektronischen Steuereinheit des Miet-Fahrrades sinnvoll.
Zu diesem Zweck strahlt die der Abstellstation zugeordnete Sende-Spule die Identitäts-Kennung der Abstellstation in einem kontinuierlichen Zyklus aus, wobei dieser Zyklus durch das Einfügen von Abstrahl-Pausen intermittierend gestaltet wird. In diesen Pausen schaltet die Abstellstation die in den Absperrbolzen eingearbeiteten Spulen in einen Empfangs-Modus. Die elektronische Steuereinheit des Miet-Fahrrades veranlasst - nachdem mittels eines Mikroschalters eine Betätigung des Sperrknopfes registriert worden ist - die Bildung einer Zufallszahl und deren Ausstrahlung über die in der Verriegelungseinrichtung des Miet-Fahrrades integrierte Spule. Die Dauer dieser Abstrahlung umfasst mindest einen vollständigen Zyklus seitens der Abstellstation, damit diese während mindestens einer Abstrahl-Pause angesprochen werden kann. Nach einer derartigen Abstrahl-Phase schaltet die Spule der Verriegelungseinrichtung wieder in den Empfangs-Betrieb. Die Zufallszahl wird somit während mindestens einer Abstrahl-Pause von der Auswerteelektronik der Abstellstation empfangen und dort unter Anwendung eines geheimen Schlüssels für die Errechnung eines Authentifizierungscodes herangezogen. Dieser Authentifizierungscode wird mit dem nächstfolgenden Ausstrahl-Zyklus von der Spule des Absperrbolzens an die Spule der dem Fahrrad zugehörigen Verriegelungseinrichtung zurück übertragen. Die elektronische Steuereinheit des Miet-Fahrrades überprüft den so erhaltenen Authentifizierungscode, registriert bei korrekter Authentifizierung das Ende des Mietvorganges und gibt einen entsprechenden Quittungscode an den Nutzer aus.

Eine erfindungsgemäße Abstellstation umfasst Absperrseite, Absperrbolzen und in diese Absperrbolzen integrierte Sende- / Empfangsantennen. Die Codierung der Identitäts-Kennungen der Abstellstationen erfolgt nach denselben formalen Vorgaben wie die Codierung der Identitäts-Kennungen der Miet-Fahrräder, belegt jedoch einen hierzu eindeutig abgegrenzten Werte-Bereich.

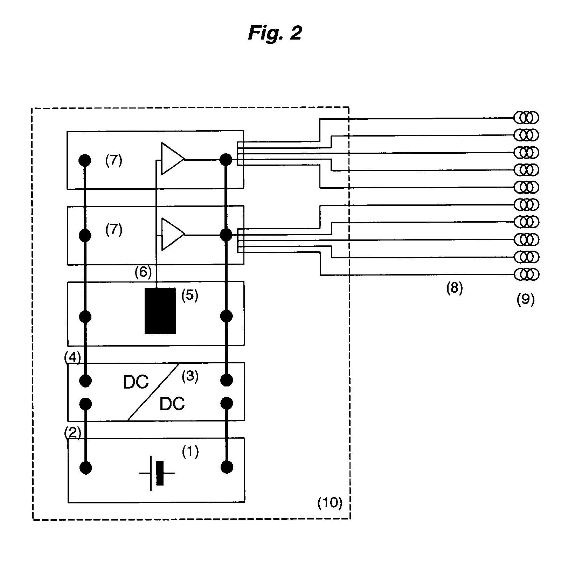

Die Abstellstation Elektronik (siehe Blockschaltbild in Figur 2) besteht aus
■ einer aufladbaren Stromquelle (1), deren Aufladung durch Solarzellen erfolgen kann. Idealerweise kann hierfür eine kostengünstige, handelsübliche Autobatterie zum Einsatz kommen. Es ist keine Netzspannungsversorgung notwendig, so dass die Abstellstationen örtlich sehr flexibel aufgestellt werden können. Die Kapazität eine Autobatterie ist mit ca. 170 Ah so groß bemessen, dass die Abstellstation ein Jahr lang ohne Wartung auskommt;
■ einer Leitungsverbindung (2) zum DC / DC - Spannungskonverter Konverter;
■ ein DC / DC - Spannungskonverter (3) mit hohem Wirkungsgrad, der die benötigte stabilisierte Spannung für die elektronische Steuereinheit und die Verstärker zur Verfügung stellt;
■ einer Leitungsverbindung (4) zur Steuereinheit und zur den Verstärkern für die Spannungsversorgung;
■ einer elektronischen Steuereinheit (5) mit Logik, die das kontinuierliche Signal für die Antennen erzeugt, auf das die Identitäts-Kennung der Abstellstation aufmoduliert ist. Die Identitäts-Kennung ist in einem Speicherbaustein abgelegt und wird bei der Produktion festgelegt bzw. kann beim Aufstellen programmiert werden;
■ einer Leitungsverbindung (6) zu den Verstärkern mit dem modulierten Antennensignal;
■ mehreren Verstärkern (7), die eine Gruppe von mehreren (beispielsweise: 5) Absperrbolzen und Antennen mit der notwendigen Leistung versorgen können;
■ an jedem Fahrrad-Abstellplatz ein Absperrseil (8) mit Absperrbolzen (9), die gruppenweise aus dem Verstärker versorgt werden;
■ in jedem Absperrbolzen (9) eine Sende-/Empfangsantenne zum Signalaustausch mit dem Miet-Fahrrad
■ ein abgeschlossenes Gehäuse (10) innerhalb der Abstellstation, das die Elektronikkomponenten vor Witterungseinflüssen und Vandalismus schützt.

Der beschriebene Aufbau ist sehr viel günstiger herzustellen und zu betreiben als die aus dem Stand der Technik bekannten Vorschläge, welche üblicherweise eine weitaus komplexere Technik benötigen.

### Bezugszeichenliste:

- Vorgang (A): Ausstrahlen einer der Abstellstation zugeordneten Identitäts-Kennung
- Vorgang (B): Erzeugen einer Zufallszahl
- Vorgang (C): Ausstrahlen der erzeugten Zufallszahl
- Vorgang (D): Ausstrahlen des Authentifizierungscodes
- Vorgang (E): Erstellen eines Quittungscodes

- 1: Aufladbare Stromquelle, z.B. Autobatterie
- 2: Leitungsverbindung zum DC / DC - Spannungskonverter
- 3: DC / DC - Spannungskonverter
- 4: Leitungsverbindung zur Steuereinheit und zu den Verstärkern für die Spannungsversorgung
- 5: Elektronische Steuereinheit mit Logik-Bauteil
- 6: Leitungsverbindung zu den Verstärkern mit Antennensignal
- 7: Verstärker
- 8: Leitungsführung in einem Absperrseil der Abstellstation
- 9: Induktive Sendeantenne im Absperrbolzen
- 10: Gehäuse

## Patentansprüche

1. Verfahren zum gesicherten Abstellen eines Nutzobjektes in einem automatisierten Vermietsystem mit mindestens einem Absperrseil, welches mit einem Ende untrennbar mit einer ortsfesten Abstellstation verbunden ist und an seinem freien Ende einen Absperrbolzen trägt, sowie mindestens einer mit dem Nutzobjekt unlösbar verbundenen Verriegelungseinrichtung zum Verriegeln des in die Verriegelungseinrichtung einführbaren Absperrbolzens, wobei sowohl der Absperrbolzen als auch die Verriegelungseinrichtung jeweils über Mittel zum wechselseitigen Übertragen elektrischer und / oder elektromagnetischer Signale zwischen Absperrbolzen und Verriegelungseinrichtung verfügen,
**dadurch gekennzeichnet,**
**dass** von dem dem Absperrbolzen (8) zugeordneten Signalübertragungsmittel (9) nach erfolgtem Verriegeln des Absperrbolzens in der Verriegelungseinrichtung ein die Abstellstation identifizierendes Signal an das Signalübertragungsmittel der Verriegelungseinrichtung übertragen wird (Vorgang A).

2. Verfahren zum gesicherten Abstellen eines Nutzobjektes nach Anspruch 1, **dadurch gekennzeichnet, dass** das die Abstellstation identifizierende Signal vom Signalübertragungsmittel der Verriegelungseinrichtung an eine dem Nutzobjekt zugehörige elektronische Steuereinheit übermittelt und dort als Voraussetzung für die Erstellung eines Quittungscodes zum Nachweis der Beendigung der Benutzung des von der Verriegelungseinrichtung kontrollierten Nutzobjektes verarbeitet wird.

3. Verfahren zum gesicherten Abstellen eines Nutzobjektes nach Anspruch 2, **dadurch gekennzeichnet, dass** das die Abstellstation identifizierende Signal in einen Quittungscode zum Nachweis der Beendigung der Benutzung des von der Verriegelungseinrichtung kontrollierten Nutzobjektes chiffriert wird.

4. Verfahren zum gesicherten Abstellen eines Nutzobjektes nach Anspruch 1 oder 2, **dadurch gekennzeichnet, dass** nach Übertragung des die Abstellstation identifizierenden Signals an das Nutzobjekt eine Zufallszahl vom Signalübertragungsmittel der Verriegelungseinrichtung erzeugt (Vorgang B), an die Abstellstation übertragen (Vorgang C) und dort zu einem Authentifizierungs-Code weiterverarbeitet wird, der vom Signalübertragungsmittel der Abstellstation wieder an die Verriegelungseinrichtung zurück übertragen wird (Vorgang D).

5. Verfahren zum gesicherten Abstellen eines Nutzobjektes nach Anspruch 4, **dadurch gekennzeichnet, dass** in der dem Nutzobjekt zugehörigen Steuereinheit nur bei Vorliegen eines als gültig erkannten Authentifizierungs-Codes ein Quittungscode zum Nachweis der Beendigung der Benutzung des von der Verriegelungseinrichtung kontrollierten Nutzobjektes erstellt wird (Vorgang E).

6. Vorrichtung zum gesicherten Abstellen eines Nutzobjektes in einem automatisierten Vermietsystem mit mindestens einem Absperrseil, welches mit einem Ende untrennbar mit einer ortsfesten Abstellstation verbunden ist und an seinem freien Ende einen Absperrbolzen (8) trägt, sowie mindestens eine mit dem Nutzobjekt unlösbar verbundene Verriegelungseinrichtung zum Verriegeln des in die Verriegelungseinrichtung einführbaren Absperrbolzens, wobei die Verriegelungseinrichtung über Mittel zum wechselseitigen Übertragen elektrischer und / oder elektromagnetischer Signale verfügt,
**dadurch gekennzeichnet,**
**dass** der mindestens eine mit der Abstellstation verbundene Absperrbolzen (8) Mittel (9) zum wechselseitigen Übertragen elektrischer und / oder elektromagnetischer Signale zwischen Absperrbolzen und Verriegelungseinrichtung aufweist, wobei das dem Absperrbolzen zugeordnete Signalübertragungsmittel (9) ein die Abstellstation identifizierendes Signal an das Signalübertragungsmittel der Verriegelungseinrichtung überträgt (Vorgang A).

7. Vorrichtung zum gesicherten Abstellen eines Nutzobjektes nach Anspruch 6, **dadurch gekennzeichnet, dass** die Mittel zum wechselseitigen Übertragen elektrischer und / oder elektromagnetischer Signale zwischen Absperrbolzen und Verriegelungseinrichtung als Induktionsspulen ausgeführt sind, die sowohl im Absperrbolzen als auch in der Verriegelungseinrichtung derart angeordnet sind, dass im Zustand eines in der Verriegelungseinrichtung verriegelten Absperrbolzens ein auf Induktion basierender Signalaustausch möglich ist.

8. Vorrichtung zum gesicherten Abstellen eines Nutzobjektes nach Anspruch 6 oder 7, **dadurch gekennzeichnet, dass** die Signalübertragungsmittel mehrerer Absperrbolzen in Parallelschaltung an ein Sender- / Verstärker-Bauelement (7) zur Ausstrahlung des die Abstellstation identifizierenden Signals angeschlossen sind.
